# EUROPÄISCHE PATENTSCHRIFT

(11) **EP 3 063 512 B1**
(45) Veröffentlichungstag und Bekanntmachung des Hinweises auf die Patenterteilung: **18.12.2019**
(21) Anmeldenummer: 15728775.6
(22) Anmeldetag: 26.05.2015
(51) Int. Cl.: G01F 23/296

(54) **VORRICHTUNG ZUM BESTIMMEN EINER HÖHE EINER FLUIDOBERFLÄCHE IN EINEM FLUIDBEHÄLTER**
DEVICE FOR DETERMINING A HEIGHT OF THE SURFACE OF A FLUID IN A FLUID CONTAINER
DISPOSITIF DE DÉTERMINATION DE LA HAUTEUR D'UNE SURFACE DE FLUIDE DANS UN RÉCIPIENT DE FLUIDE

(30) Priorität: 27.05.2014 DE 102014210080
(43) Veröffentlichungstag der Anmeldung: 07.09.2016
(73) Patentinhaber: Continental Automotive GmbH, 30165 Hannover (DE)
(72) Erfinder: PFEIFFER, Karl-Friedrich, 91058 Erlangen (DE); GROTEVENT, Henning, 90425 Nürnberg (DE); WEBER, Claus, 90513 Zirndorf (DE); JÄGER, Wighard, 91080 Spardorf (DE)
(86) Internationale Anmeldenummer: PCT/EP2015/061493
(87) Internationale Veröffentlichungsnummer: WO 2015/181105

(56) Entgegenhaltungen:
- DE-A1-102011 086 774
- DE-A1-102011 089 685
- US-A- 5 693 881
- US-A1- 2003 140 696
- US-A1- 2004 007 061
- US-A1- 2010 018 309
- US-A1- 2012 118 059

## Beschreibung

Die Erfindung betrifft eine Vorrichtung zum Bestimmen einer Höhe einer Fluidoberfläche in einem Fluidbehälter.

Zum Bestimmen einer Höhe einer Fluidoberfläche in einem Fluidbehälter kann insbesondere eine akustische Messvorrichtung eingesetzt werden. Ein Schallwandler der akustischen Messvorrichtung kann sowohl als Schallerzeuger als auch als Schallempfänger arbeiten. Für eine Bestimmung der Höhe der Fluidoberfläche in dem Fluidbehälter können mittels des Schallwandlers Schallimpulse in das zu vermessende Fluid abgegeben werden. Die Schallimpulse können von einer Grenzfläche des Fluids zu einem weiteren Medium reflektiert werden. Aus der Laufzeit der Schallimpulse können Rückschlüsse auf die Höhe der Fluidoberfläche in dem Fluidbehälter gezogen werden.

Aus der US 5 693 881 A ist eine Vorrichtung zum Nivellieren von Oberflächen bekannt, die sich dem Prinzip bedient, dass Wasser sein eigenes Niveau sucht.

Die US 2003/140696 A offenbart ein piezoelektrisches Flüssigkeitsmesssystem, insbesondere für Kraftstofftanks für Fahrzeuge. Das System weist piezoelektrische Mittel auf, die dazu ausgebildet sind, Schallwellen in einer Flüssigkeit auszusenden und wieder zu empfangen, um den Abstand des von der Welle zurückgelegten Wegs in der Flüssigkeit auf der Grundlage der Zeit zwischen Aussenden und Empfangen der Welle zu ermitteln.

Aus der US 2004/007061 A1 ist ein Fluidlevelsensor zur Verwendung in einem Fluidreservoir, insbesondere einem Fahrzeugkraftstofftank, bekannt.

Die DE 10 2011 089 685 A1 offenbart eine Messanordnung zur Bestimmung eines Füllstands und/oder einer Konzentration einer Flüssigkeit.

Die Aufgabe, die der Erfindung zugrunde liegt, ist es, eine Vorrichtung zum Bestimmen einer Höhe einer Fluidoberfläche in einem Fluidbehälter zu schaffen, die eine zuverlässige Bestimmung der Höhe der Fluidoberfläche ermöglicht und zugleich kostengünstig und effizient hergestellt werden kann.

Die Aufgabe wird gelöst durch die Merkmale des unabhängigen Patentanspruchs. Vorteilhafte Weiterbildungen der Erfindung sind in den Unteransprüchen gekennzeichnet.

Die Erfindung zeichnet sich aus durch eine Vorrichtung zum Bestimmen einer Höhe einer Fluidoberfläche in einem Fluidbehälter. Die Vorrichtung umfasst einen ersten Schallwandler zum Senden und Empfangen von ersten Schallsignalen. Die Vorrichtung umfasst ferner einen zweiten Schallwandler zum Senden und Empfangen von zweiten Schallsignalen, wobei die beiden Schallwandler an einem Bodenabschnitt des Fluidbehälters in gleicher Ausrichtung angeordnet sind.

Des Weiteren umfasst die Vorrichtung ein Referenzelement, das zu dem zweiten Schallwandler einen vorgegeben Abstand aufweist. Das Referenzelement ist in einem Fluidraum des Fluidbehälters angeordnet.

Die Vorrichtung umfasst ferner ein Umlenkelement, das in dem Fluidraum angeordnet ist zum Umlenken der zweiten Schallsignale um einen vorgegebenen Winkel in Richtung des einen Referenzelements. Dabei weist der Bodenabschnitt des Fluidbehälters mindestens eine Ausbuchtung auf, mit der das Umlenkelement mechanisch gekoppelt ist. Die Ausbuchtung springt in den Fluidraum vor. Dies ermöglicht eine einfache Anordnung des Umlenkelements.

Des Weiteren umfasst die Vorrichtung eine Steuereinheit, die dazu ausgebildet ist, abhängig von den zweiten Schallsignalen eine Schallgeschwindigkeit innerhalb eines Fluids in dem Fluidraum zu ermitteln. Die Steuereinheit ist ferner dazu ausgebildet, abhängig von den ersten Schallsignalen und der Schallgeschwindigkeit innerhalb des Fluids die Höhe der Fluidoberfläche über dem Bodenabschnitt des Fluidbehälters zu ermitteln.

Eine derartige Anordnung der beiden Schallwandler ermöglicht ein präzises Bestimmen der Höhe bei hohen Füllständen sowie bei niedrigen Füllständen von beispielsweise weniger als 10%. Ein Strahlengang der beiden Schallwandler erfolgt dabei beispielsweise unabhängig voneinander.

Der erste Schallwandler strahlt zu diesem Zweck direkt in Richtung der Fluidoberfläche. Eine Ermittlung der Schallgeschwindigkeit innerhalb des Fluids ermöglicht ein präzises Ermitteln einer Signallaufzeit. Um auch bei niedrigen Füllständen die Schallgeschwindigkeit innerhalb des Fluids ermitteln zu können, hat es sich als vorteilhaft erwiesen, die zweiten Schallsignale in niedriger Höhe über dem Bodenabschnitt des Fluidbehälters zu senden und zu empfangen. Insbesondere bei hohen Füllständen ist eine hindernisfreie, direkte Ausbreitung der ersten Schallsignale vorteilhaft, um einen Signalleistungsverlust gering zu halten. Dadurch wird ein besonders großer Messbereich ermöglicht.

Die Anordnung der beiden Schallwandler in dem Bodenabschnitt des Fluidbehälters in gleicher Ausrichtung hat den Vorteil, dass nur mehr ein Montageschritt vonnöten ist, was zu einer kostengünstigen und effizienten Herstellung der Vorrichtung beigeträgt. Ferner ist es beispielsweise insbesondere bei Bauraumbeschränkungen vorteilhaft, beide Schallwandler an dem Bodenabschnitt des Fluidbehälters anzuordnen. Die beiden Schallwandler sind beispielsweise als Piezowandler ausgebildet. Eine Montage der beiden Schallwandler ist beispielsweise durch deren geringe Größe zusätzlich erschwert. Die Anordnung der beiden Schallwandler an den Bodenabschnitt des Fluidbehälters trägt in vorteilhafterweise dazu bei, dass die Montage präzise und effizient erfolgt. Ferner führt ein Kreuzen akustischer Pfade der beiden Schallwandler zu einer besonders kompakten Bauform der Vorrichtung.

In einer Ausführungsform ist der Bodenabschnitt separat von Seitenwänden des Fluidbehälters ausgebildet. Dies trägt beispielsweise zusätzlich zu einer einfachen Montage der beiden Schallwandler bei.

In einer weiteren Ausführungsform ist das Umlenkelement aus Metall, Keramik oder Glas ausgebildet. Relativ zu dem Fluid in dem Fluidbehälter weist das Umlenkelement so eine hohe akustische Impedanz auf. Somit wird eine zuverlässige Umlenkung der Schallsignale ermöglicht. Des Weiteren ermöglicht dies beispielsweise eine robuste Anordnung des Umlenkelements als freistehendes Bauteil.

In einer weiteren Ausführungsform ist das Umlenkelement als Hohlkörper ausgebildet. Im Falle, dass das Umlenkelement mit Luft gefüllt ist, wird in vorteilhafter Weise eine thermisch bedingte Ausdehnung des Umlenkelements verringert. Ferner reduzieren sich dadurch beispielsweise Materialkosten und ein Gewicht der Vorrichtung.

In einer weiteren Ausführungsform ist der Hohlkörper mit Luft gefüllt. Relativ zu dem Fluid in dem Fluidbehälter weist das Umlenkelement so eine niedrige akustische Impedanz auf. In vorteilhafter Weise ermöglicht dies eine zuverlässige Umlenkung der Schallsignale.

In einer weiteren Ausführungsform lenkt das Umlenkelement die zweiten Schallsignale um 90° um. Dies trägt zu einer einfachen Ermittlung der Schallgeschwindigkeit bei.

In einer weiteren Ausführungsform ist die Ausbuchtung als dreiseitiges Prisma ausgebildet. Die erste Seitenfläche des dreiseitigen Prismas ist komplanar zu dem Bodenabschnitt des Fluidbehälters angeordnet. Die zweite Seitenfläche des dreiseitigen Prismas ist senkrecht zu dem Bodenabschnitt des Fluidbehälters angeordnet und die dritte Seitenfläche des Prismas ist mit dem Umlenkelement gekoppelt.

Dies hat den Vorteil, dass verhindert wird, dass Luftblasen, die in dem Fluid im Fluidbehälter eingeschlossen sind, unter das Umlenkelement geraten. Ferner ermöglicht dies, dass das mit Luft gefüllte, als Hohlkörper ausgebildete Umlenkelement in der Ausbuchtung angeordnet ist.

In einer weiteren Ausführungsform weist die mindestens eine Ausbuchtung an einer senkrecht zu dem Bodenabschnitt des Fluidbehälters angeordneten Grundfläche eine Nut auf zur Aufnahme des Umlenkelements. Dies ermöglicht eine freistehende Anordnung des Umlenkelements, wodurch Material, Gewicht und insbesondere Bauraum eingespart werden können.

Ausführungsbeispiele sind im Folgenden anhand der schematischen Zeichnungen erläutert. Es zeigen:
- Figur 1: ein erstes, nicht-erfindungsgemäßes Ausführungsbeispiel einer Vorrichtung zum Bestimmen einer Höhe einer Fluidoberfläche in einem Fluidbehälter,
- Figur 2: ein zweites, erfindungsgemäßes Ausführungsbeispiel der Vorrichtung zum Bestimmen der Höhe der Fluidoberfläche in dem Fluidbehälter,
- Figur 3: ein drittes, erfindungsgemäßes Ausführungsbeispiel der Vorrichtung zum Bestimmen der Höhe der Fluidoberfläche in dem idbehälter und
- Figur 4: ein viertes, erfindungsgemäßes Ausführungsbeispiel der Vorrichtung zum Bestimmen der Höhe der Fluidoberfläche in dem Fluidbehälter.

Elemente gleicher Konstruktion oder Funktion sind figurenübergreifend mit den gleichen Bezugszeichen versehen.

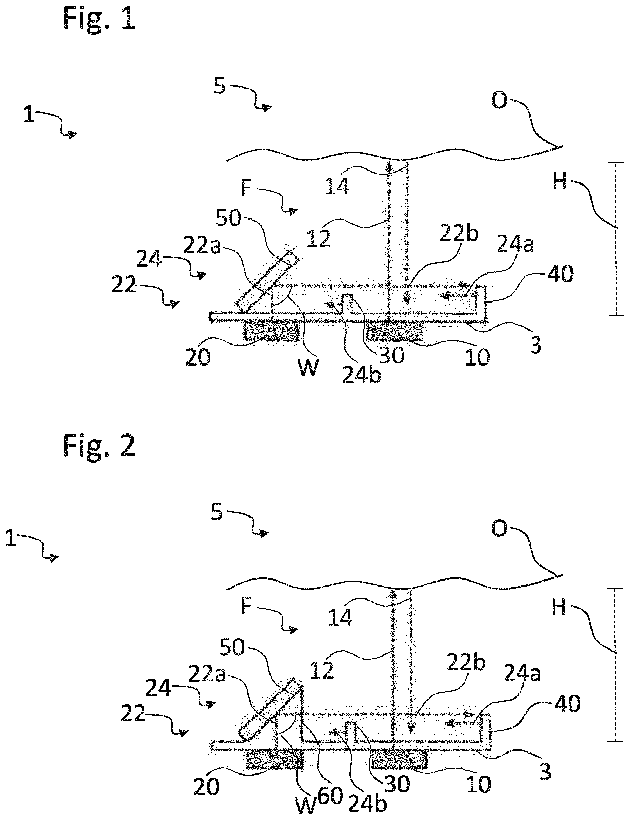

Figur 1 zeigt einen Fluidbehälter 1 mit einem Bodenabschnitt 3 sowie einem Fluidraum 5, der mit einem Fluid F befüllt ist. Bei dem Fluid F handelt es sich beispielsweise um ein flüssiges Medium zur Schadstoffreduktion in Abgasen, das vorzugsweise ein Reduktionsmittel und/oder einen Reduktionsmittelvorläufer, beispielsweise eine wässrige Harnstofflösung aufweist.

Zum Bestimmen einer Höhe H einer Fluidoberfläche 0 in dem Fluidbehälter 1 sind an dem Bodenabschnitt 3 des Fluidbehälters 1 ein erster Schallwandler 10, sowie ein zweiter Schallwandler 20 angeordnet. Die Höhe H ist dabei definiert als ein Abstand der Fluidoberfläche 0 von dem Bodenabschnitt 3, gemessen in einer Neutralstellung des Fluidbehälters 1, also wenn keine Schrägstellung des Fluidbehälters 1 vorliegt und die Fluidoberfläche 0 parallel zu dem Bodenabschnitt 3 ist. Die Höhe H kann auch als ein Füllstand des Fluidbehälters 1 bezeichnet werden.

Die beiden Schallwandler 10, 20 sind beispielsweise als Piezowandler ausgebildet und durch eine Gehäusewandung des Fluidbehälters 1 angekoppelt. Beispielsweise ist die Gehäusewandung aus einem Kunststoff ausgebildet, wie beispielsweises aus sogenanntem hoch dichtem Polyethylen (high density polyethylen, HDPE), so dass der Bodenabschnitt 3 in der Gehäusewandung eingeschweißt werden kann. Alternativ sind die beiden Schallwandler 10, 20 beispielsweise mit der Gehäusewandung verklebt oder mechanisch an diese gepresst, eventuell auch mit einer weiteren Zwischenschicht um Unebenheiten oder Rauigkeiten auszugleichen.

Der erste Schallwandler 10 umfasst einen Sender, der erste Schallsignale 12 in Richtung der Fluidoberfläche 0 aussendet. Der erste Schallwandler 10 ist dabei so ausgerichtet, dass eine Hauptstrahlungsrichtung der ausgesendeten ersten Schallsignale 12 senkrecht zu dem Bodenabschnitt 3 auf die Fluidoberfläche 0 gerichtet ist.

Der Fluidraum 5 oberhalb des Fluids F ist mit einem weiteren Medium wie beispielsweise Luft gefüllt, so dass die gesendeten ersten Schallsignale 12 an einem Übergang der Fluidoberfläche 0 zu der Luft reflektieren und reflektierte erste Schallsignale 14 auf den ersten Schallwandler 10 treffen. Durch einen Empfänger des ersten Schallwandlers 10 werden die reflektierten ersten Schallsignale 14 aufgenommen. Beispielsweise kann ein einzelnes Piezoelement als Sender und Empfänger eingesetzt werden. Die Ausrichtung des ersten Schallwandlers 10 führt dabei ebenso zu einer im Wesentlichen senkrechten Ausbreitung der ersten reflektierten Schallsignale 14 zu dem Bodenabschnitt 3 des Fluidbehälters 1. Die Ausbreitung der ersten Schallsignale 12, 14 erfolgt direkt, so dass ein Leistungsabfall an Hindernissen verhindert wird und so ein Bestimmen von hohen Füllständen des Fluidbehälters 1 ermöglicht wird.

Zur präzisen Bestimmung der Höhe H der Fluidoberfläche 0 in dem Fluidbehälter 1 muss eine Signalausbreitungsgeschwindigkeit der ersten Schallsignale 12, 14 bekannt sein. Aus diesem Grund wird eine Referenzmessung mittels des zweiten Schallwandlers 20 durchgeführt. Um diese Referenzmessung auch bei niedrigen Höhen H der Fluidoberfläche 0 in dem Fluidbehälter 1 durchführen zu können, also beispielsweise bei Füllständen unter 10 % eines maximalen Füllstands, erfolgt eine Schallausbreitung der zweiten Schallsignale 22, 24 nahe dem Bodenabschnitt 3 des Fluidbehälters 1 im Wesentlichen parallel zu dem Bodenabschnitt 3. Analog zu dem ersten Schallwandler 10 umfasst der zweite Schallwandler 20 einen Sender, der zweite Schallsignale 22 aussendet und einen Empfänger, der reflektierte zweite Schallsignale 24 aufnimmt. Ein Kreuzen akustischer Pfade der Schallsignale 12, 14 und 22, 24 führt dabei zu einer besonders kompakten Bauform der Vorrichtung, ohne wesentliche Beeinflussung der Schallsignale 12, 14, 22, 24.

In dem Fluidraum 5 sind ein erstes Referenzelement 30 sowie ein zweites Referenzelement 40 angeordnet. Die beiden Referenzelemente 30, 40 sind vorzugsweise aus einem Material gebildet, das ein Metall aufweist. Beispielsweise sind die beiden Referenzelemente 30, 40 aus einem Metallstück ausgebildet und durch heißverstemmte Kunststoffnasen mit dem Bodenabschnitt 3 des Fluidbehälters 1 gekoppelt.

Die beiden Referenzelemente 30, 40 reflektieren zumindest einen Teil des ausgesendeten zweiten Schallsignals 22. Das erste Referenzelement 30 hat zu dem zweiten Schallwandler 20 einen vorgegebenen ersten Abstand. Das zweite Referenzelement 40 hat zu dem zweiten Schallwandler 20 einen vorgegebenen zweiten Abstand und insbesondere einen genau bekannten Abstand zu dem Referenzelement 30. Mittels einer nicht näher dargestellten Steuereinheit wird eine Laufzeitdifferenz der reflektierten zweiten Schallsignale 24 abhängig von dem bekannten Abstand der beiden Referenzelemente 30, 40 zueinander ermittelt und abhängig von der Laufzeitdifferenz eine Schallgeschwindigkeit in dem Fluid F in dem Fluidbehälter 1 ermittelt. Abhängig von der Schallgeschwindigkeit innerhalb des Fluids F und den ersten Schallsignalen 12, 14 kann so die Höhe H der Fluidoberfläche 0 über den Bodenabschnitt 3 des Fluidbehälters 1 ermittelt werden.

Um eine Montage der beiden Schallwandler 10, 20 einfach und kostengünstig zu gestalten sowie eine Anzahl erforderlicher Montageschritte gering zu halten ist der zweite Schallwandler 20 in gleicher Ausrichtung zu dem ersten Schallwandler 10 an dem Bodenabschnitt 3 des Fluidbehälters 1 angeordnet.

In einem ersten Abschnitt 22a der ausgesendeten zweiten Schallsignale 22 ist deren Hauptstrahlungsrichtung so ebenfalls im Wesentlichen senkrecht zu dem Bodenabschnitt 3 des Fluidbehälters 1. Um die Schallausbreitung der zweiten Schallsignale 22, 24 nahe dem Bodenabschnitt 3 des Fluidbehälters 1 im Wesentlichen parallel zu dem Bodenabschnitt 3 zu gewährleisten ist in dem Fluidraum 5 ein Umlenkelement 50 angeordnet.

Das Umlenkelement 50 schließt mit dem Bodenabschnitt 3 des Fluidbehälters 1 einen 45°-Winkel ein, so dass die zu dem Bodenabschnitt 3 senkrechten zweiten ausgesendeten Schallsignale 22 des ersten Abschnitts 22a um den vorgegebenen Winkel W, um 90° umgelenkt werden und in einem zweiten Abschnitt 22b im Wesentlichen parallel zu dem Bodenabschnitt 3 von dem Umlenkelement 50 in Richtung der beiden Referenzelemente 30, 40 reflektieren. Analog dazu werden von den beiden Referenzelementen 30, 40 reflektierte zweite Schallsignale 24, die in einem ersten Abschnitt 24a im Wesentlichen parallel zu dem Bodenabschnitt 3 verlaufen, um 90° in Richtung des zweiten Schallwandlers 20 umgelenkt.

Das Umlenkelement 50 ist beispielsweise aus einem Metallstück ausgebildet und weist eine hohe akustische Impedanz relativ zu der akustischen Impedanz des Fluids F auf, so dass ein Großteil der Schallsignale 22, 24 reflektiert wird.

In diesem Ausführungsbeispiel ist das Umlenkelement 50 freistehend angeordnet. Zwei hier nicht näher dargestellte Ausbuchtungen 60 des Bodenabschnitts 3 weisen jeweils eine Nut auf, die mit dem Bodenabschnitt 3 einen 45°-Winkel einschließt. Die beiden Ausbuchtungen 60 sind dabei parallel zur Bildebene angeordnet, so dass das Umlenkelement 50 beispielsweise in die Nut eingeschoben werden kann. In vorteilhafter Weise wird so Bauraum eingespart, der beispielsweise ein Tankvolumen des Fluidraums 5 vergrößert.

In einem zweiten Ausführungsbeispiel (Figur 2) weist der Bodenabschnitt 3 des Fluidbehälters 1 zur mechanischen und akustischen Kopplung des Umlenkelements 50 eine einzelne Ausbuchtung 60 auf, auf der das Umlenkelement 50 aufliegt. Beispielsweise ist das Umlenkelement 50 durch eine Klebstoff- und/oder Schweißverbindung zusätzlich mechanisch fixiert. Alternativ ist das Umlenkelement 50 beispielsweise in die Ausbuchtung 60 integriert.

Die Ausbuchtung 60 ist in diesem Ausführungsbeispiel als dreiseitiges Prisma ausgebildet, dessen erste Seitenfläche komplanar zu dem Bodenabschnitt 3 angeordnet ist. Eine zweite Seitenfläche des dreiseitigen Prismas ist senkrecht zu dem Bodenabschnitt 3 des Fluidbehälters 1 angeordnet und eine dritte Seitenfläche des dreiseitigen Prismas schließt mit dem Bodenabschnitt 3 einen 45°-Winkel ein, so dass das Umlenkelement 50 mit der Ausbuchtung 60 gekoppelt werden kann.

Bei einem Befüllen des Fluidbehälters 1 können Luftblasen in dem Fluid F in dem Fluidraum 5 eingeschlossen werden. Bei einer freistehenden Anordnung des Umlenkelements 50 können diese sich unter dem Umlenkelement 50 verfangen und eine unkontrollierte Streuung der zweiten Schallsignale 22, 24 hervorrufen. In vorteilhafter Weise wird dies durch die als Prisma ausgebildete Ausbuchtung 60 verhindert, da das Fluid F nicht unter die aufliegende Fläche des Umlenkelements 50 gelangt.

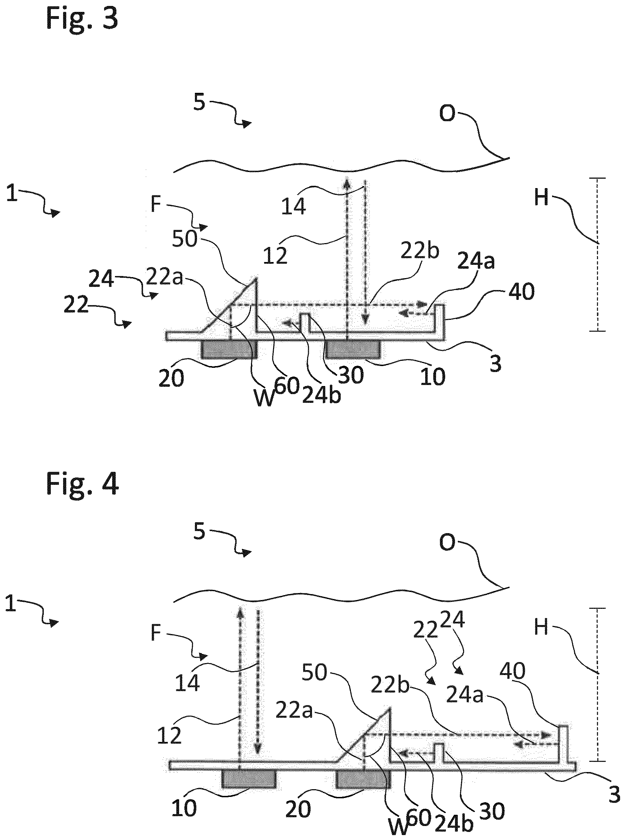

In einem dritten Ausführungsbeispiel (Figur 3) ist das Umlenkelement 50 als Hohlraum ausgebildet, der beispielsweise mit Luft gefüllt ist. Dieser weist relativ zu dem Fluid F in dem Fluidraum 5 eine niedrige akustische Impedanz auf, so dass ein Großteil der Schallsignale 22, 24 reflektiert wird. Das Umlenkelement 50 ist in vorteilhafter Weise in der Ausbuchtung 60 des Bodenabschnitts 3 des Fluidbehälters 1 angeordnet, so dass kein weiteres Bauteil benötigt wird. Beispielsweise umfasst die Ausbuchtung 60 dazu einen Lufteinschluss in einem Hohlraum der Ausbuchtung 60, der als Umlenkelement 50 ausgebildet ist.

In einem vierten Ausführungsbeispiel (Figur 4) erfolgt eine Bestimmung der Höhe H der Fluidoberfläche 0 des Fluids F in dem Fluidbehälter 1 analog zu dem dritten Ausführungsbeispiel aus Figur 3. In diesem Fall sind die beiden Schallwandler 10, 20 räumlich voneinander derart getrennt, dass die ersten Schallsignale 12, 14 und die zweiten Schallsignale 22, 24 sich separat ausbreiten, also sich nicht kreuzen.

## Patentansprüche

1. Vorrichtung zum Bestimmen einer Höhe (H) einer Fluidoberfläche (O) in einem Fluidbehälter (1), umfassend
- einen ersten Schallwandler (10) zum direkten Senden und Empfangen von ersten Schallsignalen (12, 14) in Richtung der Fluidoberfläche, und einen zweiten Schallwandler (20) zum Senden und Empfangen von zweiten Schallsignalen (22, 24), wobei die beiden Schallwandler (10, 20) außerhalb des Fluidraums an einem Bodenabschnitt (3) des Fluidbehälters (1) in gleicher Ausrichtung angeordnet sind,
- ein Referenzelement (30, 40), das zu dem zweiten Schallwandler (20) einen vorgegeben Abstand aufweist und in einem Fluidraum (5) des Fluidbehälters (1) angeordnet ist,
- ein Umlenkelement (50), das in dem Fluidraum (5) angeordnet ist zum Umlenken der zweiten Schallsignale (22, 24) um einen vorgegebenen Winkel (W) in Richtung des Referenzelements (30, 40), und
- eine Steuereinheit, die dazu ausgebildet ist, abhängig von den zweiten Schallsignalen (22, 24) eine Schallgeschwindigkeit innerhalb eines Fluids (F) in dem Fluidraum (5) zu ermitteln und abhängig von den ersten Schallsignalen (12, 14) und der Schallgeschwindigkeit innerhalb des Fluids (F) die Höhe (H) der Fluidoberfläche (O) über dem Bodenabschnitt (3) des Fluidbehälters (1) zu ermitteln,
**dadurch gekennzeichnet,**
**dass** der Bodenabschnitt (3) des Fluidbehälters (1) mindestens eine Ausbuchtung (60) aufweist, die in den Fluidraum (5) vorspringt und mit der das Umlenkelement (50) mechanisch gekoppelt ist.

2. Vorrichtung nach Anspruch 1, bei der der Bodenabschnitt (3) separat von Seitenwänden des Fluidbehälters (1) ausgebildet ist.

3. Vorrichtung nach Anspruch 1 oder 2, bei der das Umlenkelement (50) aus Metall, Keramik oder Glas ausgebildet ist.

4. Vorrichtung nach Anspruch 1 oder 2, bei der das Umlenkelement (50) als Hohlkörper ausgebildet ist.

5. Vorrichtung nach Anspruch 4, bei der der Hohlkörper mit Luft gefüllt ist.

6. Vorrichtung nach einem der vorstehenden Ansprüche, bei der das Umlenkelement (50) die zweiten Schallsignale (22, 24) um 90° umlenkt.

7. Vorrichtung nach einem der vorstehenden Ansprüche, bei der die mindestens eine Ausbuchtung (60) als dreiseitiges Prisma ausgebildet ist, dessen erste Seitenfläche komplanar zu dem Bodenabschnitt (3) des Fluidbehälters (1) angeordnet ist, dessen zweite Seitenfläche senkrecht zu dem Bodenabschnitt (3) des Fluidbehälters (1) angeordnet ist und dessen dritte Seitenfläche mit dem Umlenkelement (50) gekoppelt ist.

8. Vorrichtung nach einem der vorstehenden Ansprüche, bei der die mindestens eine Ausbuchtung (60) an einer senkrecht zu dem Bodenabschnitt (3) des Fluidbehälters (1) angeordneten Grundfläche eine Nut aufweist zur Aufnahme des Umlenkelements (50).

## Claims

1. Device for determining a height (H) of a fluid surface (O) in a fluid container (1), comprising
- a first sound transducer (10) for directly transmitting and receiving first sound signals (12, 14) in the direction of the fluid surface and a second sound transducer (20) for transmitting and receiving second sound signals (22, 24), wherein the two sound transducers (10, 20) are arranged outside the fluid space at a base portion (3) of the fluid container (1) with the same alignment,
- a reference element (30, 40) which has a predetermined distance from the second sound transducer (20) and which is arranged in a fluid space (5) of the fluid container (1),
- a deflection element (50) which is arranged in the fluid space (5) for the purposes of deflecting the second sound signals (22, 24) by a predetermined angle (W) in the direction of the reference element (30, 40), and
- a control unit which is configured to establish a speed of sound within a fluid (F) in the fluid space (5) dependent on the second sound signals (22, 24) and to establish the height (H) of the fluid surface (O) over the base portion (3) of the fluid container (1) dependent on the first sound signals (12, 14) and the speed of sound within the fluid (F),
**characterized**
**in that** the base portion (3) of the fluid container (1) has at least one protrusion (60), which projects into the fluid space (5) and to which the deflection element (50) is mechanically coupled.

2. Device according to Claim 1, wherein the base portion (3) is embodied separately from side walls of the fluid container (1).

3. Device according to Claim 1 or 2, wherein the deflection element (50) is made of metal, ceramics or glass.

4. Device according to Claim 1 or 2, wherein the deflection element (50) is embodied as a hollow body.

5. Device according to Claim 4, wherein the hollow body is filled with air.

6. Device according to one of the preceding claims, wherein the deflection element (50) deflects the second sound signals (22, 24) by 90°.

7. Device according to one of the preceding claims, wherein the at least one protrusion (60) is embodied as a three-sided prism, the first side face of which is arranged in coplanar fashion with the base portion (3) of the fluid container (1), the second side face of which is arranged perpendicular to the base portion (3) of the fluid container (1) and the third side face of which is coupled to the deflection element (50).

8. Device according to one of the preceding claims, wherein the at least one protrusion (60) has a groove for accommodating the deflection element (50) at a base area arranged perpendicular to the base portion (3) of the fluid container (1).

## Revendications

1. Dispositif pour déterminer une hauteur (H) d'une surface de fluide (O) dans un réservoir de fluide (1), comprenant
- un premier transducteur acoustique (10) destiné à émettre et recevoir directement des premiers signaux sonores (12, 14) en direction de la surface de fluide, et un deuxième transducteur acoustique (20) destiné à émettre et recevoir des deuxièmes signaux sonores (22, 24), les deux transducteurs acoustiques (10, 20) étant disposés dans la même orientation à l'extérieur de l'espace à fluide au niveau d'une portion de fond (3) du réservoir de fluide (1),
- un élément de référence (30, 40) qui possède un écart prédéfini par rapport au deuxième transducteur acoustique (20) et qui est disposé dans un espace à fluide (5) du réservoir de fluide (1),
- un élément de déviation (50) qui est disposé dans l'espace à fluide (5) pour dévier les deuxièmes signaux sonores (22, 24) d'un angle (W) prédéfini en direction de l'élément de référence (30, 40),
et
- une unité de commande qui est configurée pour identifier une vitesse du son à l'intérieur d'un fluide (F) dans l'espace à fluide (5) en fonction des deuxièmes signaux sonores (22, 24) et pour identifier la hauteur (H) de la surface de fluide (O) au-dessus de la portion de fond (3) du réservoir de fluide (1) en fonction des premiers signaux sonores (12, 14) et de la vitesse du son à l'intérieur du fluide (F),
**caractérisé en ce que**
la portion de fond (3) du réservoir de fluide (1) possède au moins une indentation (60) qui fait saillie dans l'espace à fluide (5) et avec laquelle l'élément de déviation (50) est couplé mécaniquement.

2. Dispositif selon la revendication 1, avec lequel la portion de fond (3) est configurée séparément des parois latérales du réservoir de fluide (1).

3. Dispositif selon la revendication 1 ou 2, avec lequel l'élément de déviation (50) est réalisé en métal, en céramique ou en verre.

4. Dispositif selon la revendication 1 ou 2, avec lequel l'élément de déviation (50) est réalisé sous la forme d'un corps creux.

5. Dispositif selon la revendication 4, avec lequel le corps creux est rempli d'air.

6. Dispositif selon l'une des revendications précédentes, avec lequel l'élément de déviation (50) dévie les deuxièmes signaux sonores (22, 24) de 90°.

7. Dispositif selon l'une des revendications précédentes, avec lequel l'au moins une indentation (60) est réalisée sous la forme d'un prisme triangulaire dont la première face latérale est disposée de manière coplanaire à la portion de fond (3) du réservoir de fluide (1), dont la deuxième face latérale est disposée perpendiculairement à la portion de fond (3) du réservoir de fluide (1) et dont la troisième face latérale est couplée avec l'élément de déviation (50).

8. Dispositif selon l'une des revendications précédentes, avec lequel l'au moins une indentation (60) possède, au niveau d'une surface de base disposée perpendiculairement à la portion de fond (3) du réservoir de fluide (1), une rainure destinée à accueillir l'élément de déviation (50).
